(19) Europäisches Patentamt / European Patent Office / Office européen des brevets

(11) **EP 4 500 142 B1**

(12) **FASCICULE DE BREVET EUROPEEN**

(45) Date de publication et mention
de la délivrance du brevet:
**08.07.2026 Bulletin 2026/28**

(21) Numéro de dépôt: **23719041.8**

(22) Date de dépôt: **27.03.2023**

(51) Classification Internationale des Brevets (IPC):
**G01M 15/12** *(2006.01)* **G01M 7/00** *(2006.01)*
**G01P 3/48** *(2006.01)* **G06F 17/18** *(2006.01)*

(52) Classification Coopérative des Brevets (CPC):
**G01M 15/12; G01M 7/00; G01P 3/48; G06F 17/18**

(86) Numéro de dépôt international:
**PCT/FR2023/050430**

(87) Numéro de publication internationale:
**WO 2023/187285 (05.10.2023 Gazette 2023/40)**

(54) **MÉTHODE DE SURVEILLANCE DU RÉGIME MOTEUR D'UN AÉRONEF**

VERFAHREN ZUR ÜBERWACHUNG DER MOTORDREHZAHL EINES FLUGZEUGS

METHOD FOR MONITORING THE ENGINE SPEED OF AN AIRCRAFT

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **28.03.2022 FR 2202763**

(43) Date de publication de la demande:
**05.02.2025 Bulletin 2025/06**

(73) Titulaires:
• **Institut National des Sciences Appliquées de
Lyon**
**69621 Villeurbanne Cedex (FR)**
• **SAFRAN**
**75015 Paris (FR)**

(72) Inventeurs:
• **HAWWARI, Yasmine**
**77550 MOISSY-CRAMAYEL (FR)**
• **ABBOUD, Dany**
**77550 MOISSY-CRAMAYEL (FR)**
• **MARNISSI, Yosra**
**77550 MOISSY-CRAMAYEL (FR)**
• **EL BADAOUI, Mohammed**
**77550 MOISSY-CRAMAYEL (FR)**
• **ANTONI, Jérôme**
**69621 Villeurbanne Cedex (FR)**
• **ANDRE, Hugo**
**69621 Villeurbanne Cedex (FR)**

(74) Mandataire: **Cabinet Camus Lebkiri**
**25 rue de Maubeuge**
**75009 Paris (FR)**

(56) Documents cités:
EP-A1- 0 724 159     WO-A1-2004/017038
US-A- 5 109 700      US-A1- 2005 209 814
US-A1- 2007 032 966

# EP 4 500 142 B1

**Description**

## DOMAINE TECHNIQUE DE L'INVENTION

Le domaine technique de l'invention est celui de la surveillance de machine tournante et plus particulièrement de moteurs d'aéronefs par analyse de signaux vibratoires, et la transmission de puissance des moteurs.

La présente invention concerne une méthode de surveillance du régime moteur d'une machine tournante.

## ARRIERE-PLAN TECHNOLOGIQUE DE L'INVENTION

Il existe un certain nombre de méthodes destinées à la surveillance de machines tournantes, notamment au moyen de mesures des vibrations induites par le fonctionnement de la machine et des éléments entrainés. Cependant, les méthodes connues de l'état de l'art dans le domaine sont difficilement applicables à des engins aéronautiques, en particulier les moteurs d'avions et d'hélicoptères. En effet, la surveillance du fonctionnement des moteurs d'aéronefs est rendue difficile, d'une part, par l'accessibilité et l'encombrement des lignes d'arbres et moteurs tournants dans des environnements critiques qui entravent l'installation de dispositifs et systèmes dédiés à la surveillance et, autre part, par le fait que les régimes moteur de ces machines tournantes sont à très haute vitesse, ce qui provoque l'apparition d'harmoniques supplémentaires dans le signal vibratoire, contrairement à un moteur avec un régime de fonctionnement à basse vitesse qui présentera un signal vibratoire dont le spectre est moins riche en harmoniques. Ces fréquences supplémentaires risquent alors d'interférer et de masquer les fréquences d'intérêt permettant d'évaluer l'état de fonctionnement du moteur. On parle d'interférence harmonique.

En outre, les moteurs d'aéronefs étant conçus pour atteindre de très hautes vitesses de rotation, ils sont soumis à des phases de très fortes accélérations et décélérations. Les signaux vibratoires acquis durant ces phases sont donc non stationnaires et présentent une forte variabilité. De plus, les différentes parties du moteur n'auront pas le même comportement lors d'une phase d'accélération de décélération. L'interférence harmonique est donc dépendante du mode de fonctionnement du moteur.

Par ailleurs, les moteurs d'aéronefs peuvent être agencés en plusieurs parties qui n'ont pas nécessairement des modes de fonctionnement synchrones. En général, les turbomachines comportent deux arbres de rotation ayant tous deux une vitesse de rotation différente. On parle dans ce cas des vitesses de rotation N1 et N2 des arbres. Il est d'ailleurs possible que les différentes parties, notamment les arbres des vitesses N1 et N2, aient des modes de fonctionnement asynchrones durant les phases stationnaires de régime moteur, ainsi que durant les phases d'accélération et de décélération. Ces modes de fonctionnement asynchrones peuvent eux aussi générer un contenu harmonique supplémentaire qui pénalise la discrimination des multiples fréquences associées aux fonctionnement des différents éléments tournants du moteur dans le spectre des signaux. En effet, certaines composantes harmoniques vont se superposer ou se masquer les unes les autres, ce qui entraînera une mauvaise estimation de l'état de fonctionnement du moteur. L'interférence harmonique est alors également dépendante des modes de fonctionnement des différentes parties du moteur qui peuvent être non-synchronisées et dont le régime de rotation peut fortement varier au cours du temps.

Enfin, lorsque le moteur d'un aéronef est en fonctionnement, de nombreuses sources de bruit apparaissent qui sont aussi bien d'origine solidienne qu'aérienne ou thermique. Les sources de bruit principales sont la combustion du carburant pour mouvoir l'aéronef, l'écoulement aérodynamique des fluides dans le moteur et autour de l'appareil et les résonnances des différents éléments du moteur et de l'aéronef par les vibrations générées par le moteur. Ces multiples sources de bruit, majoritairement large bande, font que les niveaux de rapport signal à bruit dans les signaux vibratoires acquis sont faibles et qu'il est difficile d'y différencier le contenu fréquentiel d'intérêt, représentatif de l'état de fonctionnement du moteur, du bruit.

La grande majorité des méthodes de surveillance de l'état de l'art s'appuie sur l'utilisation d'un signal de vitesse ou de position angulaire (par exemple, les brevets et demandes FR3087265A1, WO2019207242A1, FR3102858A1, FR3096133B1, FR3079977B1) pour mesurer des signaux vibratoires de référence. Pour ces méthodes, il est donc nécessaire de mesurer cette vitesse de rotation, ce qui contraint également d'ajouter une instrumentation hardware sur le système de surveillance. Cependant, en aéronautique, le nombre de capteurs qui peut être installé est très restreint. L'installation d'un capteur de position, dont la résolution est souvent trop faible par rapport aux signaux mesurés, est de surcroît très difficile, voire impossible, du fait de l'encombrement et du besoin de compacité des systèmes moteurs. Par ailleurs, les capteurs de vitesse ou de position angulaire communément utilisés sont peu adaptés pour une utilisation dans des moteurs d'aéronefs car ils sont peu robustes aux conditions critiques dans lesquelles les moteurs fonctionnent (très fortes vibrations, forts gradients de température et de pression, hautes vitesses, etc.).

Par ailleurs, on connait de l'état de l'art des méthodes d'analyse monofréquentielle de signaux vibratoires à partir desquels est estimée la vitesse de rotation instantanée. Cette vitesse est déterminée par application d'un filtre passe bande autour d'une seule composante des signaux. Cependant, ces méthodes ne sont pas compatibles pour une application aéronautique du fait de l'interférence harmonique décrite plus haut, de la multiplicité des harmoniques d'intérêt présentes dans un tel signal vibratoire et des forts niveaux de bruit mesurés.

On connait également des méthodes d'estimation basées sur la comparaison avec un signal vibratoire de référence ou appliquée à des structures simples où le contenu harmonique est aisément identifiable, car les régimes de fonctionnement sont à basse vitesse et que les variations sont lentes ou par palier. Ces méthodes ne sont pas compatibles pour des applications aéronautiques puisque les éléments rotatifs des aéronefs sont sujets à des régimes transitoires brusques, propres à chaque élément, et à des régimes de fonctionnement avec de très hautes vitesses, générant des contenus harmoniques très riches. De plus, en régime non-stationnaire, les moteurs d'aéronef génèrent des fuites d'énergie (en anglais « spectral leakage ») considérables dans les spectres des signaux vibratoires mesurés, rendant l'identification des pics par comparaison avec un signal de référence infaisable. Dans les spectres, la fuite d'énergie se traduit notamment par l'étalement du contenu fréquentiel et l'apparition d'harmoniques parasites.

Le document EP0724159 décrit une méthode de surveillance d'un moteur rotatif à partir d'un signal vibratoire filtré haut, puis intégré, et ensuite soumis à une transformation de Fourier permettant de déterminer la vitesse de rotation instantanée par élimination du bruit aléatoire et sporadique.

On connait, enfin, des méthodes d'analyse temporelle des signaux vibratoires, comme par exemple décrit dans le document US2005/0209814.

L'inconvénient de ces méthodes est que, dans le domaine temporel, le bruit est très corrélé aux signaux d'intérêt, ce qui nécessite de prendre en compte toutes les harmoniques lors de l'analyse. Dans le cas d'un signal aéronautique, il est impossible de connaître toutes les composantes harmoniques des signaux du fait de la complexité des engins et de la multiplicité des modes de fonctionnement des moteurs. Par ailleurs, une harmonique peut localement perdre en amplitude et être masquée à cause de hauts niveaux de bruit ou de l'interférence harmonique. Par ailleurs, dans ces méthodes, le bruit est modélisé avec un comportement Gaussien, ce qui est n'est pas réaliste dans un cas aéronautique où le bruit est de nature impulsive.

Il existe donc un besoin d'une méthode pour surveiller l'état de fonctionnement d'une machine tournante, au moyen d'un signal vibratoire, qui permette de discriminer le contenu harmonique d'intérêt du bruit généré par le fonctionnement de la machine et de réduire la sensibilité du signal vibratoire à l'interférence harmonique.

## RESUME DE L'INVENTION

L'invention offre une solution aux problèmes évoqués précédemment, en permettant la surveillance, grâce à la mesure d'un signal vibratoire, d'une machine tournante de sorte que le contenu harmonique d'intérêt soit discriminé du bruit engendré par le fonctionnement de la machine, tout en réduisant la sensibilité du signal vibratoire à l'interférence harmonique.

Un premier aspect de l'invention concerne une méthode de surveillance du régime moteur d'une machine tournante, la méthode comprenant les étapes suivantes :

- Construction d'un spectrogramme brut à partir d'un signal vibratoire mesuré par un capteur de vibrations ;
- Débruitage du spectrogramme brut pour obtenir un spectrogramme égalisé, l'étape de débruitage comprenant :

  ○ Une première sous-étape de détermination d'un pied du spectrogramme brut, la première sous-étape comprenant :

  • Une première sous-sous-étape de construction d'une fonction de régression robuste aux pics du spectrogramme brut ;
  • Une deuxième sous-sous-étape de détermination du pied du spectre à partir de la fonction de régression ;

  ○ Une deuxième sous-étape de détermination du spectrogramme égalisé à partir du pied du spectrogramme ;

- Séparation de sources dans le spectrogramme égalisé par détermination d'un estimateur des fréquences d'intérêt ;
- Détermination d'une vitesse de rotation instantanée du régime moteur à partir de l'estimateur des fréquences d'intérêt.

On entend par « machine tournante » un engin motorisé dont le moteur transforme l'énergie apportée au moteur en un mouvement rotatif, par exemple au travers d'une ligne d'arbre. Dans le contexte de l'invention, il s'agit notamment d'aéronefs tels des avions ou hélicoptères, mais il peut également s'agir de moteur d'éoliennes, de moteurs de véhicules roulants, etc.

On entend par « surveillance du régime moteur » la surveillance de l'état de fonctionnement du moteur permettant la rotation de la machine tournante, notamment par l'estimation de rotation instantanée de la machine tournante. La surveillance permet alors d'anticiper et/ou de déceler des dysfonctionnements dans le fonctionnement de la machine tournante. Par exemple, l'estimation de la vitesse de rotation instantanée permet de vérifier si le régime moteur de la machine tournante est bien celui attendu, en comparaison à des données de références, en vue d'une éventuelle maintenance de la machine tournante ou de la détection d'une anomalie de fonctionnement. La vitesse de rotation instantanée peut être définie comme étant la vitesse de rotation estimée dans un intervalle de temps dont la durée est petite devant la durée de l'acquisition du signal vibratoire.

On entend par « spectrogramme » la représentation au cours du temps du contenu fréquentiel d'un ou plusieurs signaux. Par ailleurs, les termes contenu fréquentiel, contenu harmonique, composantes harmoniques et harmoniques font tous référence à l'ensemble des fréquences (ou harmoniques) contenues dans le spectre des signaux, le spectre d'un signal étant obtenu par application d'une transformée de Fourier depuis le domaine temporel vers le domaine fréquentiel. Le « contenu harmonique d'intérêt » est ainsi le contenu fréquentiel qui est représentatif du régime moteur de la machine tournante et qui permet, notamment, de déterminer sa vitesse de rotation instantanée, les fréquences d'intérêt étant linéairement dépendantes de la vitesse de rotation instantanée.

On entend par « capteur de vibration » un capteur adapté pour mesurer les vibrations auxquelles une structure est soumise. Il peut, par exemple, s'agir d'un capteur de type accéléromètre, basé sur l'effet piézoélectrique, d'un vibromètre laser, d'un capteur de déplacement capacitif ou à courants de Foucault, etc.

On entend par « interférence harmonique » le phénomène par lequel deux contenus fréquentiels de sources différences et simultanément mesurés par un même capteur peuvent partiellement ou totalement interférer l'un l'autre. Cette interférence a pour effet d'altérer partiellement ou totalement le contenu fréquentiel du signal, notamment par la superposition (en phase) ou le masquage (en opposition de phase) des contenus harmoniques.

Grâce à l'invention, il est possible de surveiller le régime moteur d'une machine tournante et de déterminer sa vitesse de rotation instantanée au moyen d'un signal vibratoire fortement bruité et dont le contenu harmonique d'intérêt est altéré par de l'interférence harmonique. La méthode est donc particulièrement adaptée à des applications hautes vitesses telles que les moteurs d'hélicoptères et d'avions en aéronautique. La méthode peut également être appliquée à autres types de machines tournantes ou à des machines à combustion et explosion.

La mise en œuvre de la méthode de surveillance dans le domaine fréquentiel permet d'accélérer les traitements de débruitage du signal et de séparation de sources, contrairement à une application dans le domaine temporel. De plus, dans le domaine fréquentiel, l'hypothèse que le bruit est décorrélé du signal est plus réaliste que dans le domaine temporel, ce qui rend le débruitage plus aisé et moins biaisé.

L'étape de débruitage du spectrogramme brut du signal vibratoire permet ainsi l'obtention d'un spectrogramme égalisé, grâce à l'utilisation du pied du spectrogramme qui est représentatif du bruit large bande, de sorte à avoir des niveaux de bruit uniforme en tout point des axes de temps et de fréquence. Par ailleurs, le pied du spectrogramme permet de rendre le spectrogramme robuste aux pics présents dans son spectre.

L'étape pour la détermination d'un estimateur des fréquences d'intérêt permet ensuite, de réduire les effets de l'interférence harmonique dans le spectrogramme égalisé, par séparation des sources dans le signal vibratoire, afin de mieux discriminer les fréquences d'intérêt pour la détermination de la vitesse de rotation instantanée de la machine tournante.

Enfin, la méthode est aisément praticable dans le cadre d'une application aéronautique puisqu'elle ne requiert, a minima, qu'un seul capteur de vibrations, dont les dimensions sont compatibles avec les problématiques d'encombrement et de compacité des systèmes aéronautiques. L'installation de peu de matériel est donc suffisante pour que la méthode selon l'invention soit opérationnelle. En outre, les capteurs de vibrations étant plus robustes aux environnements critiques et plus sensibles aux hautes fréquences que des capteurs de vitesse ou de position, la méthode est adaptée à une application aéronautique.

Outre les caractéristiques qui viennent d'être évoquées dans le paragraphe précédent, la méthode selon le premier aspect de l'invention peut présenter une ou plusieurs caractéristiques complémentaires parmi les suivantes, considérées individuellement ou selon toutes les combinaisons techniquement possibles.

Selon une variante de réalisation, la méthode comprend en outre une étape de détection d'une anomalie de fonctionnement du moteur de la machine tournante en fonction de la vitesse de rotation instantanée.

Grâce à cette variante, il est possible de détecter un fonctionnement anormal d'un ou plusieurs éléments tournants de la ligne d'arbre du moteur de la machine tournante. On entend par fonctionnement anomal, un état de fonctionnement du régime moteur qui n'est pas celui attendu pour le régime moteur considéré, par rapport à un état de fonctionnement nominal ou de référence.

Selon une variante de réalisation, le spectrogramme brut est construit par une Transformée de Fourier appliquée au signal vibratoire sur une pluralité de fenêtres temporelles successives et de courte durée.

Grâce à cette variante, il est possible de construire un spectrogramme par tronçons temporelles, de sorte que l'intervalle de temps sur lequel est appliqué la Transformée de Fourier soit suffisamment petit pour que l'hypothèse d'un signal stationnaire soit valable.

Selon une variante de réalisation, l'étape de séparation de sources est répétée jusqu'à satisfaction d'un critère de convergence, ladite étape de séparation de sources comprenant une première sous-étape de détermination de fréquences d'intérêt en fonction d'amplitudes des fréquences d'intérêt, et une deuxième sous-étape d'estimation des amplitudes des fréquences d'intérêt en fonction des fréquences d'intérêt, lesdites première et deuxième sous-étapes étant alternativement exécutées à chaque itération de ladite étape de séparation de sources, et l'estimateur des fréquences d'intérêt étant en outre déterminé en fonction des fréquences d'intérêt et des amplitudes des fréquences d'intérêt.

Grâce à cette variante, il est possible de déterminer l'estimateur des fréquences d'intérêt alors que les amplitudes des fréquences d'intérêt n'est pas connu initialement. La recherche itérative par estimation alternative des fréquences d'intérêt et des amplitudes associées permet de corriger le contenu fréquentiel d'intérêt de l'interférence harmonique. Cette correction est de plus réalisée de façon adaptative par la mise en œuvre alternative des étapes d'estimation des fréquences d'intérêt et d'estimation des amplitudes associées. Le caractère adaptatif de cette variante permet à la méthode d'être robuste aux variations de régimes du moteur de l'aéronef. La méthode est donc appropriée pour estimer la vitesse de rotation instantanée y compris lorsque le signal vibratoire est non-stationnaire.

Selon une variante de réalisation, l'étape de séparation de sources est mise en œuvre par un algorithme Espérance-Maximisation, où la première sous-étape de détermination de fréquences d'intérêt est la E-étape de l'algorithme Espérance-Maximisation, et où la deuxième sous-étape d'estimation des amplitudes des fréquences d'intérêt est la M-étape de l'algorithme Espérance-Maximisation.

Selon une variante de réalisation, la sous-étape de détermination de fréquences d'intérêt en fonction d'amplitudes des fréquences d'intérêt comprend une première sous-sous-étape de détermination d'une probabilité a posteriori sur les fréquences d'intérêt, et une deuxième sous-étape de détermination d'une espérance d'une log-vraisemblance des amplitudes des fréquences d'intérêt.

Selon une variante de réalisation, la sous-étape d'estimation des amplitudes des fréquences d'intérêt en fonction des fréquences d'intérêt comprend une première sous-sous-étape de détermination d'une probabilité a posteriori sur les amplitudes des fréquences d'intérêt, une deuxième sous-sous-étape de détermination d'une probabilité a posteriori sur les amplitudes des fréquences d'intérêt, et une troisième sous-sous-étape de détermination d'une variance d'une distribution Gaussienne généralisée lissée du spectrogramme égalisé.

Selon une variante de réalisation, l'estimateur des fréquences d'intérêt est déterminé, à la satisfaction d'un critère d'arrêt, en fonction de la probabilité a posteriori sur les fréquences d'intérêt.

Selon une variante de réalisation, la méthode comprend en outre une étape d'interpolation de l'estimateur des fréquences d'intérêt.

Selon une variante de réalisation, la méthode comprenant en outre une étape de lissage de l'interpolation de l'estimateur des fréquences d'intérêt.

Un deuxième aspect de l'invention, non revendiqué, concerne un produit-programme d'ordinateur comprenant des instructions qui, quand le programme est exécuté sur un ordinateur, conduisent celui-ci à mettre en œuvre les étapes de la méthode selon le premier aspect de l'invention.

Un troisième aspect de l'invention, non revendiqué, concerne un support d'enregistrement lisible par ordinateur comprenant des instructions qui, lorsqu'elles sont exécutées par un ordinateur, conduisent celui-ci à mettre en œuvre les étapes de la méthode selon le premier aspect de l'invention.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 est un schéma synoptique illustrant l'enchaînement des étapes de la méthode selon l'invention.
- La figure 2 présente deux exemples de spectrogrammes construits et traités par la méthode selon l'invention pour des signaux acquis sur un moteur d'avion et un moteur d'hélicoptère en fonctionnement.
- La figure 3 présente les spectrogrammes bruts, c'est-à-dire non traité au moyen de la méthode selon l'invention, qui sont à l'origine des spectrogrammes traités de la figure 2.
- La figure 4 présente une illustration de la méthode de débruitage de la méthode selon l'invention pour le spectre d'un signal vibratoire.
- La figure 5 présente des spectrogrammes égalisés obtenus après égalisation des spectrogrammes brut de la figure 3 suivant l'étape de débruitage de la méthode selon l'invention.
- La figure 6 présente des exemples de probabilité a posteriori des fréquences d'intérêt déterminées suivant l'étape de séparation de sources de la méthode selon l'invention, pour les spectrogrammes égalisés de la figure 5.

## DESCRIPTION DETAILLEE

Sauf précision contraire, un même élément apparaissant sur des figures différentes présente une référence unique.

Un premier aspect de l'invention concerne une méthode pour la détermination du régime moteur d'une machine tournante. La méthode comprend quatre étapes principales successives.

La machine tournante est, par exemple, un moteur d'aéronef comportant une ou plusieurs lignes d'arbres permettant de transformer l'énergie consommée par le moteur en un mouvement rotatif. La ligne d'arbre peut comporter plusieurs éléments, par exemple des roues et des aubes, pour permettre le déplacement de l'aéronef.

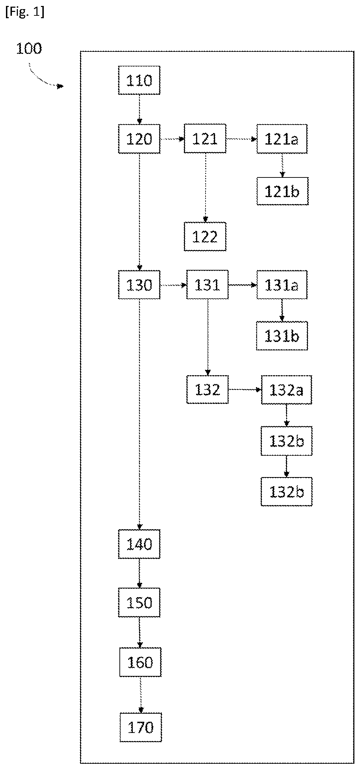

La figure 1 montre une représentation schématique des étapes principales de la méthode 100 selon l'invention.

La méthode 100 selon l'invention comporte une première étape 110 de construction d'un spectrogramme. Le spectrogramme est une représentation temps-fréquence du contenu harmonique d'un signal acquis. Préférentiellement, il s'agit d'un signal vibratoire.

Le signal vibratoire est acquis au moyen d'un capteur de vibrations, par exemple un accéléromètre piézoélectrique. Le capteur est en outre, par exemple, placé sur une ligne d'arbre de la machine tournante ou à proximité de ladite ligne d'arbre.

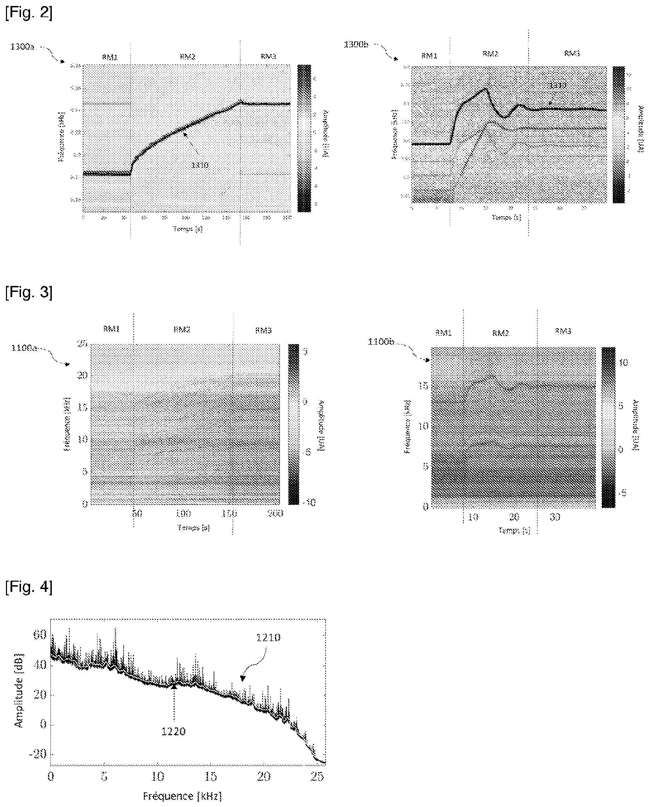

Deux exemples de spectrogrammes sont proposés à la figure 2 pour des signaux acquis, respectivement, sur un moteur d'avion et un moteur d'hélicoptère en fonctionnement.

L'axe des abscisses des spectrogrammes de la figure 2 représente le temps, l'axe des ordonnées représente la fréquence, tandis que l'échelle de gris représente l'amplitude associée à chaque fréquence.

Le spectrogramme est une représentation de l'évolution temporelle du contenu fréquentiel du signal vibratoire mesuré. En outre, le contenu harmonique du spectrogramme est représentatif de l'état du régime moteur. En effet, en fonction de l'état de fonctionnement du moteur, le contenu harmonique diffère du fait de l'excitation et la mise en résonnance des éléments de la ligne d'arbre suivant les modes propres de ces éléments. Il est par ailleurs connu que le contenu fréquentiel du signal vibratoire est linéairement dépendant du régime moteur de la machine tournante dû à la périodicité de la rotation du moteur. Cette périodicité est d'ailleurs retrouvée dans le contenu harmonique du spectre. Ainsi, l'évolution des harmoniques et de leur amplitude au cours du temps dans le signal vibratoire permet de renseigner directement sur le régime moteur du moteur de l'aéronef. En l'occurrence, on parle de trajectoire dans le plan temps-fréquence pour mentionner l'évolution d'une ou plusieurs fréquences qui sont linéairement dépendantes du régime moteur. En particulier, ces fréquences sont dépendantes de la vitesse de rotation instantanée du moteur. Par mesure de généralité, la vitesse de rotation instantanée du moteur est également appelée fréquence instantanée, puisqu'elles sont linéairement dépendantes l'une de l'autre.

Sur la figure 2, les spectrogrammes 1300a et 1300b ont déjà été traités par la méthode 100 selon l'invention suivant les étapes qui seront décrites plus loin, ceci afin de mieux illustrer le propos sur la trajectoire dans le plan temps-fréquence et d'étayer l'intérêt de l'invention par rapport à l'état de l'art. On peut observer sur les spectrogrammes 1300a et 1300b traités que l'évolution d'une trajectoire 1310, dans le plan temps fréquence, de l'harmonique d'amplitude la plus élevée est linéairement dépendante de la variation de la vitesse de rotation instantanée du moteur de l'avion. On remarque que cette trajectoire 1310 est d'abord stationnaire durant une première phase stationnaire du régime moteur RM1, puis durant une deuxième phase d'accélération du régime moteur RM2, plus longue, la trajectoire 1310 évolue et voit sa fréquence augmentée jusqu'à redevenir stationnaire au moment d'atteindre une troisième phase stationnaire du régime moteur RM3.

Dans un spectrogramme brut, c'est-à-dire non-traité au moyen de la méthode 100 selon l'invention, le suivi de la trajectoire 1310 est rendu difficile par les hauts niveaux de bruit et l'interférence harmonique. Cette problématique est illustrée sur la figure 3 où des spectrogrammes 1100a et 1100b bruts, issus des signaux vibratoires précédemment mentionnés, et associés aux spectrogrammes 1300a et 1300b traités de la figure 2, sont présentés. Sur ces spectrogrammes 1100a et 1100b bruts, le contenu harmonique d'intérêt est masqué par le bruit large bande dont le niveau est similaire à celui aux fréquences d'intérêt. De plus, il est difficile de discerner la ou les fréquences, souvent quelques pics liés à la rotation de la ligne d'arbre, qui sont représentatives du régime moteur car l'interférence harmonique ne permet pas d'identifier, par leur amplitude, les fréquences d'intérêt des fréquences liées au bruit (d'origine solidienne ou aérienne dont la source n'est pas directement le moteur de la machine tournante). En outre, du bruit peut également contenir, en fonction du régime moteur, du contenu harmonique provenant de résonnances des différents éléments constituant l'aéronef du fait de l'excitation de modes propres de ces éléments.

Par ailleurs, on peut clairement observer sur les spectrogrammes de la figure 3 que le phénomène d'interférence harmonique est dépendant du régime moteur. Le contenu harmonique des spectrogrammes 1100a et 1100b bruts est, en effet, très différent entre les régimes moteurs RM1 à RM3. La lecture conjointe des spectrogrammes 1300a et 1300b traités et des spectrogrammes 1100a et 1100b bruts, respectivement sur les figures 2 et 3, permet ainsi de saisir l'intérêt de la méthode 100 selon l'invention.

Un spectrogramme 1100 brut, lors de la première étape 110, peut être obtenu par un Transformée de Fourier (TF) appliquée au signal vibratoire sur une fenêtre temporelle de courte durée. On parle dans ce cas de Transformée de Fourier à Court Terme (TFCT) ou de Transformée de Fourier à Fenêtre Glissante (TFFG). Le spectrogramme 1100 brut est obtenu par concaténation des spectres déterminées par TFCT, pour une pluralité de fenêtres temporelles successives suivant l'axe du temps. L'intervalle de temps entre deux fenêtres temporelles est d'une durée prédéfinie. Par exemple, l'intervalle de temps peut être plus court que la largeur de la fenêtre temporelle, afin de permettre le recouvrement, au moins partiel, du signal vibratoire par deux ou plusieurs fenêtres successives. L'intérêt d'utiliser une telle TF est d'avoir une fenêtre temporelle suffisamment courte pour pouvoir considérer que le signal vibratoire, et donc son contenu spectral, est stationnaire dans cette fenêtre même si le régime moteur est dans une phase transitoire ou non stationnaire.

D'un point de vue mathématique, la construction du spectrogramme 1100 brut, lors de la première étape 110, à partir du signal vibratoire peut se traduire de la façon suivante :

On considère le signal vibro-acoustique discret $x(t)_{\{t=1,\dots,K\}}$, où t indique l'échantillon temporel et K est la longueur du signal, sous forme d'une addition :

$$x(t) = s(t) + v(t) \,.\, (\text{eq. } 1)$$

*s(t)* peut être considéré comme étant une somme de sinusoïdes caractérisée par une densité spectrale de puissance (DSP) à masses spectrales finies avec des fréquences discrètes. *v(t)* peut être considéré comme un signal résiduel composé de composantes aléatoires. Par exemple, dans le cas du signal vibratoire, *s(t)* représente des composantes cycliques produites par une machine rotative et *v(t)* représente les effets du bruit dont la ou les sources peuvent être un écoulement fluidique autour et dans l'aéronef, des turbulences ou des évènements transitoires liés au fonctionnement du moteur de la machine tournante.

Ainsi, le signal *s(t)* peut être considéré comme contenant le contenu harmonique d'intérêt pour l'estimation de la vitesse de rotation instantanée, et les familles d'harmoniques de non-intérêt peuvent être considérées comme contenues dans le signal résiduel *v(t)*. Ceci conduit à l'expression analytique suivante :

$$x(t) = \sum_{p=1}^{P} A_p(t) e^{jp\phi(t)} + v(t) \,.\, (\text{eq. } 2)$$

*P* est l'ordre harmonique du contenu fréquentiel $\phi(t) = \int_0^t f(s)\,ds$ est la phase instantanée associée à la fréquence instantanée *f(t)* à estimer. *j* est ici le nombre imaginaire.

$A_p(t)$ est défini comme les coefficients de Fourier complexes de chaque harmonique d'indice *p*. Ce dernier terme peut également s'écrire :

$$A_p(t) = c_p(t) e^{j\theta_p(t)} \,, (\text{eq. } 3)$$

où $c_p$ et $\theta_p$ sont la p-ième amplitude et la p-ième phase de l'amplitude d'indice *p*.

La TFCT peut alors être obtenue en multipliant le signal vibratoire *x(t)* par une fenêtre *w* glissante, suivant l'axe du temps, pour obtenir un segment temporel du signal vibratoire, puis par application de la TF sur ce segment temporel. La fenêtre *w* utilisée peut être n'importe quel type de fonction classiquement utilisée en traitement du signal. Par exemple, il peut s'agir une fonction Gaussienne, une fonction de Hamming, une fonction de Hanning, etc. La méthode 100 selon l'invention n'est pas restrictive quant au fenêtrage appliqué. Préférentiellement, la fenêtre appliquée est choisie de sorte à minimiser son impact sur le contenu harmonique, par exemple pour éviter l'ajout artificiel de fréquences dans le spectrogramme et/ou pour ne pas dénaturer le contenu harmonique d'intérêt.

La TFCT du signal vibratoire discret *x(t)* en un spectre discret *X(n, k)* est alors exprimée par :

$$X(n,k) = \sum_{l=0}^{L-1} x(l+nR) w(l) e^{-j2\pi lk\Delta f} \,,\ 0 \le l+nR < K,\ k = 0,1,\dots,\left\lceil \frac{1}{\Delta} f \right\rceil \,. (\text{eq. } 4)$$

*R* est la taille du recouvrement entre deux fenêtres *w(l)* temporellement adjacentes, *l* étant l'indice du segment temporel. Δ est le pas en fréquence et *L* est la taille du segment. *f* est une fréquence. *n* et *k* sont les indices des échantillons temporels et fréquentiels dans le spectrogramme, respectivement.

Après insertion de l'équation (eq.2) dans (eq.4), l'expression de *X(n, k)* devient :

$$X(n,k) = \sum_{l=0}^{L-1} \sum_{p=1}^{P} A_p(l+nR)e^{jp\phi(l+nR)}w(l)e^{-j2\pi lk\Delta f} + V(n,k). \text{(eq. 5)}$$

$V(n, k)$ est ici le spectre du bruit et des fréquences de non-intérêt contenus dans le signal $v(t)$.

Lors de la construction du spectrogramme 1100 brut, à la première étape 110, on peut considérer que la durée d'un segment temporel est petite. Ainsi, on peut considérer que la fréquence instantanée est quasi-constante par segment temporel. Ceci implique que $f(l + nR) \approx f(nR)$. L'expression $\phi(l + nR)$ peut alors être approximée par :

$$\phi(l + nR) \approx \phi(nR) + 2\pi \frac{f(nR)l}{F_s} , \text{(eq. 6)}$$

où $F_s$ est la fréquence d'échantillonnage. L'approximation $\phi(nR) \approx 2\pi \sum_{i=1}^{n-1} \frac{f(n)R}{F_s}$ est également valable.

De la même manière, pour un segment temporel de courte durée, les coefficients de Fourier, c'est-à-dire les amplitudes du contenu fréquentiel, peuvent être considérés constants sur chaque segment. On a alors : $A_p(l + nR) \approx A_p(nR)$.

Pour des raisons de simplicité, dans la suite du texte, le terme $R$ sera omis dans la notation de sorte que $A_{p,n}, \phi_n$ et $f_n$ réfèrent à $A_p(nR)$, $\phi(nR)$ et $f(nR)$, respectivement. L'expression suivante en découle :

$$X(n,k) = \sum_{p=1}^{P} A_{pn}e^{jp\phi_n} \sum_{l=0}^{L-1} w(l)e^{-j2\pi l\left(k\Delta f - pf_{\{n\}}\right)} + V(n,k) \text{ (eq. 7)}$$

On peut définir l'expression

$$\sum_{l=0}^{L-1} w(l)e^{-j2\pi l\left(k\Delta f - pf_{\{n\}}\right)} = W(k\Delta f - pf_n) \text{ (eq. 8)}$$

comme étant la transformée de Fourier de la fenêtre w. Cette quantité permet d'introduire la résolution fréquentielle de la TFCT ou, d'une manière équivalente, la bande passante de filtre de la TFCT. Ainsi, des expressions précédentes, l'expression suivante peut être déduite :

$$X(n,k) = \sum_{p=1}^{P} A_{pn}e^{jp\phi_n} W(k\Delta f - pf_n) + V(n,f) = S(n,k) + V(n,k) . \text{(eq. 9)}$$

On peut de plus considérer que $\mathbf{X}_n = [X(0,n), ...,X(F-1,n)]^T$, $\mathbf{V}_n = [V(0,n), ..., V(F-1,n)]^T$ et $\mathbf{A}_n = [A_n, ...,A_{Pn}]^T$. On peut aussi considérer $\mathbf{H}(f_n) \in \mathbb{C}^{F \times P}$ comme étant $\mathbf{H}(f_n)_{kp} = e^{jp\phi(n)}W(k\Delta f - pf_n)$. Ainsi, on obtient l'expression suivante :

$$\mathbf{X}_n = \mathbf{H}(f_n)\mathbf{A}_n + \mathbf{V}_n , \ \forall \, n \in \{1, ..., N\} , \text{(eq. 10)}$$

avec $N = \lfloor \frac{K - (L-R)}{R} \rfloor$ , le nombre de segments temporels.

Le spectrogramme 1100 brut construit à l'étape 110 de la méthode 100 selon l'invention peut ainsi être construit selon le modèle multi-harmonique tel que défini à l'équation (eq. 10), le modèle multi-harmonique pouvant être représenté comme étant $\mathbf{X} = [\mathbf{X}_0,..., \mathbf{X}n,..., \mathbf{X}_{N-1}]^T$.

La méthode 100 selon l'invention comporte, après la première étape 110 de construction du spectrogramme 1100 brut, une deuxième étape 120 de débruitage du spectrogramme 1100 brut. Cette étape 120 permet d'obtenir un spectrogramme débruité qui peut être exploité sans risquer de biaiser la détermination du régime moteur du fait de l'amplification de certaines zones fréquentielles par le bruit large bande qui provoque des déviations de la ou des trajectoires et qui amplifie localement les amplitudes dans le spectrogramme 1100 brut.

Préférentiellement, la deuxième étape 120 de débruitage permet d'obtenir un spectrogramme égalisé. On entend par spectrogramme égalisé un spectrogramme **1100** brut dont le bruit a été uniformisé suivant la dimension temporelle et suivant la dimension fréquentielle du spectrogramme sur l'ensemble des segments temporels. Cette étape permet alors d'améliorer l'émergence du contenu harmonique d'intérêt qui est représentatif de la signature des roues de la ligne d'arbre par rapport au bruit. Pour rappel, le débruitage dans le domaine de Fourier est favorisé car on peut y considérer que le bruit est décorrélé du contenu harmonique d'intérêt, contrairement au domaine temporel.

L'étape 120 de débruitage du spectrogramme 1100 brut peut reposer sur l'estimation d'un pied du spectre. On entend par « pied du spectre » l'ensemble des composantes harmoniques aléatoires contenues dans le spectrogramme 1100 brut. Cette définition inclut donc tous les effets du bruit large bande, comme le bruit aérodynamique, le bruit de combustion et le bruit de résonance. D'un point de vue graphique, le pied du spectre est la ligne qui passe à travers la composante large bande, d'une manière lisse, comme si les pics étaient absents. L'étape 120 de débruitage peut ainsi comporter une première sous-étape 121 d'estimation d'un pied du spectre du spectrogramme 1100 brut. Subséquente à la première sous-étape 121 d'estimation d'un pied du spectre du spectrogramme 1100 brut, l'étape 120 de débruitage peut en outre comprendre une deuxième sous-étape 122 de détermination d'un spectrogramme égalisé. A la deuxième sous-étape 122, le spectrogramme égalisé peut être déterminé à partir de la division du spectrogramme 1100 brut par le pied du spectre du spectrogramme 1100 brut. Il peut, par exemple, s'agir d'une division pondérée en fonction de la fréquence considérée, ou d'une division simple.

Par ailleurs, le débruitage, à la deuxième étape 120 de la méthode 100, peut être effectué en estimant le pied du spectre pour chaque segment temporel défini lors du calcul de la TFCT. L'estimation du pied du spectre à la première sous-étape 121 peut alors être une estimation par segment temporel du pied du spectre.

En outre, le débruitage peut être effectué à partir de la division, pour chaque segment temporel, des amplitudes dans le spectrogramme 1100 brut par le pied du spectre estimé. Le spectrogramme égalisé déterminé à la deuxième sous-étape 122 peut alors être déterminé, pour chaque segment temporel, à partir de la division du spectrogramme 1100 brut, dudit segment temporel, par le pied du spectre dudit segment temporel estimé à la première sous-étape 121. La division peut être une division simple ou une division pondérée, par exemple en fonction des fréquences du spectrogramme.

Mathématiquement, la mise en œuvre de la deuxième étape 120, pour le débruitage du spectrogramme 1100 brut à partir de l'estimation du pied du spectre par segment temporel, peut se traduire comme suit.

Dans un premier temps, pour chaque segment temporel du spectrogramme du signal vibratoire $\mathbf{X}_n$, la première sous-étape 121 permet d'estimer le pied du spectre $\hat{\mathbf{P}}_n$, avec $\hat{\mathbf{P}}_n = [\hat{P}(0,n),...,\hat{P}(F-1,n)]^\mathsf{T}$.

Il est possible de définir le pied du spectre comme étant $P(k,n) = \lim_{L\to+\infty} \mathbb{E}\{X(k,n)\}$ lorsque $x(t)$ ne contient que des composantes aléatoires. Or le signal vibratoire $x(t)$ comprend, en plus des composantes aléatoires $v(t)$, la partie déterministe $s(t)$ qui contient les fréquences d'intérêt du signal vibratoire. Dans un tel cas, il n'existe pas de définition exacte du pied du spectre $\hat{\mathbf{P}}_n$ pour la partie déterministe du signal. Cependant, ce pied du spectre de la partie déterministe du signal peut être estimée à partir de la tendance de $\mathbf{X}_n$, y compris si ce dernier contient des pics. Cette estimation pour la partie déterministe du signal vibratoire peut être considérée comme étant équivalente à faire une régression sur le spectrogramme 1100 brut $\mathbf{X}_n$, de sorte à être robuste vis-à-vis des pics.

La première sous-étape 121 d'estimation du pied du spectre peut ainsi comprendre une première sous-sous-étape 121a de construction d'une fonction de régression du spectrogramme 1100 brut $\mathbf{X}_n$. Ladite fonction de régression peut être construite par segment temporel et peut, en outre, être robuste vis-à-vis des pics contenus dans le spectrogramme 1100 brut.

La régression à la sous-sous-étape 121a peut s'écrire

$$\mathbf{X}_n = \mathbf{g}_n + \epsilon(k) \,.\, (\text{eq. }11)$$

$\mathbf{g}_n(.)$ est la fonction de régression et $\varepsilon(.)$ est une erreur d'approximation de la régression.

La fonction de régression $\mathbf{g}_n$ de la première sous-sous-étape 121a peut être construite à partir d'une méthode d'estimation de tendance. De préférence, la méthode d'estimation de tendance pour construire la fonction de régression est peu coûteuse en temps et est simple afin de contrôler la courbure de la régression.

La fonction de régression peut, en outre et préférentiellement, être modélisée au moyen d'une distribution à queue lourde de l'erreur afin de tenir compte du caractère impulsif du bruit dans le spectrogramme 1100 brut. Ceci permet de prendre en compte que les signaux vibratoires en aéronautique sont sujets à des composantes multiples. L'utilisation d'une distribution à queue lourde de l'erreur permet également d'améliorer la robustesse de la régression contre les harmoniques d'interférence. En effet, il est rappelé que ces signaux vibratoires comprennent généralement au moins deux familles d'harmoniques, qui sont associées à deux régimes asynchrones simultanés N1 et N2. Si on cherche à déterminer la vitesse instantanée de N1, alors N2 est considérée comme une source de bruit, en plus des harmoniques de non-intérêt associées à N1.

La fonction de régression peut être une fonction de régression par splines, avec un choix flexible de la distribution de l'erreur $\varepsilon$. La base des splines peut être choisie pour être numériquement stable. Il peut, en l'occurrence, s'agir de la base B-spline, qui consiste alors en la construction d'une base de B-spline, à la première sous-sous-étape 121a, d'ordre $o$ pour un nombre de nœuds $O$.. Les paramètres d'ordre et de nombre de nœuds sont prédéterminés de sorte à permettre le contrôle de la régularité de la fonction de régression du spectrogramme 1100 brut $\mathbf{X}_n$ et de réduire ses effets de bords.

Dans le but de rendre cette régression robuste, la fonction de régression peut, par ailleurs, être appliquée sur le logarithme du spectrogramme 1100 brut $\mathbf{X}_n$, au lieu d'être appliquée sur le spectrogramme 1100 brut $\mathbf{X}_n$ directement. En effet, la transformation logarithmique permet d'homogénéiser les amplitudes du spectre et d'être robuste aux pics. En effet, la distribution du logarithme de $\mathbf{X}_n$ est plus symétrique que celle de $\mathbf{X}_n$.

Par conséquent, la régression du spectrogramme 1100 brut à la sous-sous-étape 121a peut s'écrire de la façon suivante :

$$\ln \mathbf{X}_n = \sum_{j=1}^{O} \boldsymbol{B}_j c_j(k) + \epsilon(k) \,. \, (\text{eq. } 12)$$

$\boldsymbol{B}$ est la base B-spline et $\{c_j; j = 1, ..., O\}$ sont des coefficients de la base B-spline $\boldsymbol{B}$. La construction de la base B-spline peut se faire au moyen d'une méthode classique de la littérature.

La distribution de l'erreur $\varepsilon(k)$ de régression permet de rendre la régression plus robuste aux pics. En l'occurrence, cette distribution de l'erreur $\varepsilon(k)$ peut être à queue lourde afin de prendre en compte l'existence de pics dans $\mathbf{X}_n$. Par exemple, cette distribution de l'erreur $\varepsilon(k)$ peut suivre une loi de Student. Un maximum de vraisemblance peut alors être déterminé selon le modèle de la loi de Student en utilisant, par exemple, un algorithme des moindres carrés repondérés de manière itérative (Iteratively Reweighted Least Squares - IRLS - en anglais). Cet algorithme permet d'estimer des poids des erreurs en optimisant une fonction objectif où l'erreur dépend elle-même de poids de pondération de la fonction objectif. A chaque itération de l'algorithme IRLS, les valeurs des échantillons dont l'erreur est supérieure à un seuil prédéfini peuvent être tronquées. Ceci permet d'avoir une meilleure robustesse vis-à-vis des pics. Ledit seuil prédéfini peut être, par exemple, une constante multipliée par la médiane de la valeur absolue de l'erreur. En outre, l'algorithme IRLS permet d'obtenir les coefficients $c_j$ de la base B-spline.

La première sous-étape 121 d'estimation du pied du spectre peut, en outre, comporter une deuxième sous-sous-étape 121b de détermination du pied du spectre à partir de la fonction de régression.

Etant donné des valeurs estimées $\{c_{min,j}; j = 1, ..., o\}$, la détermination du pied du spectre $\hat{\mathbf{P}}_n$ à la deuxième sous-sous-étape 121b peut être donnée par :

$$\widehat{\mathbf{P}}_n = e^{\sum_{j=1}^{O} \boldsymbol{B}_j c_{min,j}(k)} \,. \, (\text{eq. } 13)$$

La figure 4 présente un exemple d'application de la première sous-étape 121 d'estimation d'un pied 1220 d'un spectre 1210 d'un signal. Le signal utilisé ici est un signal vibratoire, représentatif d'une signature vibratoire d'un moteur d'aéronef, bruité et contenant une pluralité de pics. Suivant les sous-sous-étapes 121a et 121b de régression du spectre 1210 et de détermination du pied 1220 du spectre 1210, une fonction de régression robuste vis-à-vis des pics du logarithme du spectre 1210 est d'abord construite, puis le pied 1220 du spectre 1210 est déterminé.

Il peut ainsi être observé que l'estimation du pied du spectre 1220 est, en effet, robuste vis-à-vis des pics : elle suit la tendance du spectre 1210 sans être affectés par les pics dans le voisinage. On peut, par ailleurs, noter qu'estimer le pied du spectre 1220 peut être assimilé à déterminer la densité spectrale du bruit du spectre 1210.

La détermination d'un spectrogramme 1200 égalisé $\mathbf{Y}_n$ par segment temporel, c'est-à-dire un spectrogramme dont le bruit est uniforme suivant les axes de temps et de fréquence, peut ensuite s'obtenir, lors de la deuxième sous-étape 122, par la division du spectre $\mathbf{X}_n$ en fonction du pied du spectre $\hat{\mathbf{P}}_n$ tel que :

$$\mathbf{Y}_n = \frac{\mathbf{X}_n}{\hat{\mathbf{P}}_n}, \; n \in [1, N] \,. \, (\text{eq. } 14)$$

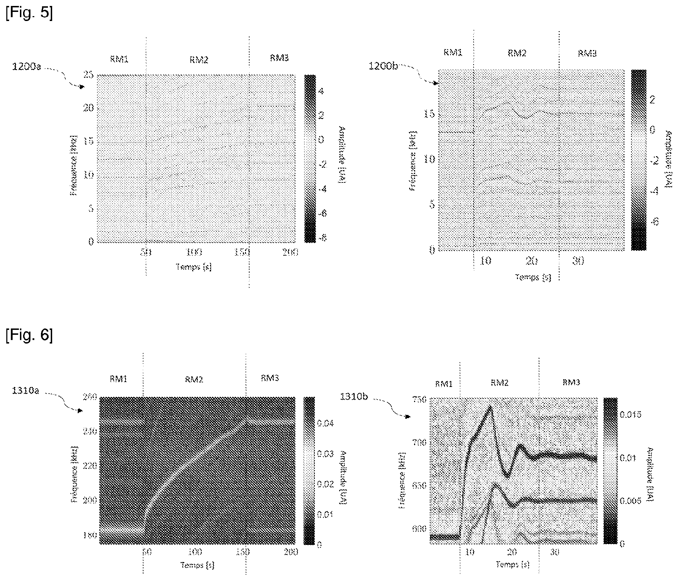

Pour illustrer l'effet du débruitage par égalisation d'un spectrogramme, la figure 5 présente deux spectrogrammes 1200a et 1200b égalisés. Les spectrogrammes 1200a et 1200b égalisés sont issus du traitement par débruitage selon la deuxième étape 120 de la méthode 100 des spectrogrammes 1100a et 1100b brut, respectivement, de la figure 3. On rappelle que le spectrogramme 1100a est issu du signal vibratoire acquis pour le moteur d'avion et que le spectrogramme 1100b est issu du signal vibratoire acquis pour le moteur d'hélicoptère. Par ces deux exemples, il peut être observé que les spectrogrammes 1200a et 1200b égalisés sont débruités du bruit large bande contenu dans les spectrogrammes 1100a et 1100b bruts. En outre, les fréquences d'intérêts ressortent plus clairement du bruit de fond. L'étape 120 de débruitage est donc bien robuste aux pics contenus dans les spectrogrammes 1100a et 1100b brut ; cette robustesse est, par ailleurs, indispensable pour mettre en œuvre la méthode 100 selon l'invention, au vu de l'abondance des pics spectraux, générés par les différents organes tournants, dans les signaux vibratoires des aéronefs.

Avantageusement, l'étape 120 de débruitage par égalisation du spectrogramme par segments temporels proposée permet non seulement d'atténuer le bruit de fond, mais aussi d'atténuer les composantes quasi-stationnaires du plan temps-fréquence, dans le cas où la composante recherchée est fortement non-stationnaire (montée de régime, descente de régime), et réciproquement d'atténuer les composantes non-stationnaires, dans le cas où la composante recherchée est quasi-stationnaire.

La méthode 100 selon l'invention comporte également une troisième étape 130 de séparation de sources. On entend par séparation de source la discrimination de deux, ou plus, sources de signaux, en l'occurrence de signaux vibratoires, présent dans un même signal. Préférentiellement, la séparation de sources sert à différencier le contenu harmonique d'intérêt masqué par du contenu harmonique de non-intérêt, causé par de l'interférence harmonique, issu des diverses sources de bruit, qui peuvent coexister, se croiser, être très proches, voire se confondre, dans une même bande de fréquence. Cette étape permet donc de réduire la sensibilité du spectrogramme 1200 égalisé à l'interférence harmonique. Ainsi, il est rendu possible de suivre la ou les trajectoires 1310 et leur évolution. Il est rappelé que les différents éléments mécaniques de la ligne d'arbre, qui sont autant de sources des harmoniques d'intérêt, sont identifiables dans le spectrogramme comme des trajectoires qui varient en fonction de la vitesse instantanée. Le régime moteur, notamment la vitesse de rotation instantanée, est déterminé en fonction de ces trajectoires.

La troisième étape 130 est préférentiellement une étape de détermination d'un estimateur des fréquences d'intérêt. L'estimateur des fréquences d'intérêt est représentatif du contenu harmonique d'intérêt du spectrogramme 1200 égalisé. L'estimateur des fréquences d'intérêt est, par exemple, déterminé en fonction de contraintes appliquées sur les trajectoires 1310 observées dans le spectrogramme 1200 égalisé. Il peut, entre autres, s'agir de contraintes concernant la fréquence de la ou des trajectoires 1310, et/ou de contraintes sur l'amplitude de ces fréquences. En effet, la détermination du régime moteur, notamment de sa vitesse de rotation instantanée, peut se faire en suivant le maximum d'amplitude dans une bande de fréquence données. Il faut donc s'assurer que l'amplitude maximale est bien associée à la vitesse de rotation instantanée à déterminer, au risque de dévier de la bonne trajectoire et donc de fournir une estimation erronée de la fréquence instantanée.

Les contraintes sur les trajectoires 1310 peuvent, par ailleurs, concerner la régularité des trajectoires. La régularité peut, par exemple, définir une régularité dans l'évolution de la ou des trajectoires 1310 et/ou des amplitudes associées. La régularité des trajectoires 1310 peut également être définie en fonction d'une ou plusieurs bandes de fréquences prédéfinies. Il peut, par exemple, s'agir de bandes de fréquences connues par ailleurs en fonction du dimensionnement de la ligne d'arbre.

L'utilisation de telles contraintes de régularité permet, par ailleurs, d'éviter des sauts et discontinuités des trajectoires 1310, par exemple du fait de la présence de pics isolés d'un bruit résiduel après l'étape 120 de débruitage.

L'estimateur des fréquences d'intérêt peut, en outre, être déterminé en fonction d'une ou plusieurs fréquences d'intérêt dans le spectrogramme 1200 égalisé et des amplitudes associées. De façon préférentielle, l'estimateur des fréquences d'intérêt est déterminé en fonction d'une répartition du contenu harmonique d'intérêt du spectrogramme 1200 égalisé. L'estimateur des fréquences d'intérêt peut, par exemple, être déterminé par une maximisation de la répartition des fréquences d'intérêt dans le spectrogramme 1200 égalisé.

Ainsi que mentionné précédemment, il est possible de suivre plusieurs trajectoires 1310 simultanément. L'avantage de prendre en compte plusieurs harmoniques au lieu d'une seule est de pouvoir, par exemple, pondérer les différentes trajectoires et leurs harmoniques les unes par rapport aux autres. Par conséquent, il est possible de donner plus de poids à des trajectoires considérées proches de la fréquence instantanée recherchée, et de permettre de réduire la sensibilité du contenu harmonique d'intérêt à l'interférence harmonique, par exemple aux moments de couplage entres différentes composantes. Les harmoniques suivies sont, par exemple, prédéterminées en fonction du dimensionnement de la ligne d'arbre. Il peut également s'agir des harmoniques les plus énergétiques, connues en fonction du dimensionnement des éléments tournants du moteur, ce qui permet d'éviter des déviations dues à une ou plusieurs composantes d'interférence plus énergétiques.

Cette approche multi-composante est rendue possible par le fait que le traitement du signal vibratoire est opéré dans le domaine spectral. L'hypothèse que les harmoniques d'intérêt et les harmoniques de non-intérêt son décorrélés est en effet suffisamment robuste dans le domaine spectral pour permettre l'utilisation de seulement une partie des harmoniques du signal vibratoire, et non de leur intégralité comme il serait nécessaire de faire dans le domaine temporel. Cette hypothèse de décorrélation est d'autant plus avantageuse que les signaux vibratoires en aéronautique sont très riches en contenu harmonique, et prendre en compte toutes ces harmoniques serait inextricable.

Lorsqu'on considère le modèle multi-harmoniques présenté dans l'équation (eq.10), seul le spectrogramme 1100 brut $X_n$ du signal vibro-acoustique est connu. En particulier on ne connait pas les amplitudes $A_n$ du contenu

fréquentiel d'intérêt. Or, pour estimer les fréquences d'intérêt $f_n$, et ainsi déterminer la vitesse instantanée du régime moteur, il est requis de connaître les amplitudes $\mathbf{A}_n$. En effet, l'identification de la vitesse de rotation instantanée peut se faire en fonction de l'amplitude des différentes trajectoires, de préférence suivant la trajectoire de plus forte amplitude. La troisième étape 130 de séparation de sources est donc une étape pour identifier les fréquences d'intérêt $f_n$ dans le contenu harmonique à partir d'une estimation des amplitudes $\mathbf{A}_n$ du contenu harmonique d'intérêt par l'estimation d'un estimateur des fréquences d'intérêt. Cet estimateur des fréquences d'intérêt permet donc de discriminer les fréquences d'intérêt $f_n$ des effets de l'interférence harmonique.

La détermination de l'estimateur des fréquences d'intérêt peut se faire au moyen d'un algorithme de recherche itératif. Par exemple, il peut s'agir d'un algorithme basé sur la minimisation d'une fonction coût, comme une méthode du gradient multiobjectif ou un algorithme génétique. Il est également possible d'utiliser une méthode reposant sur la théorie Bayésienne.

L'algorithme de recherche itératif est préférentiellement un algorithme espérance-maximisation (EM). Un tel algorithme permet, du fait de son approche Bayésienne, d'introduire des contraintes de régularité et de continuité lors de l'estimation. Ceci permet de réduire les risques de déviation dans l'estimation des trajectoires 1310. L'algorithme EM permet d'obtenir une loi de probabilité a posteriori sur la fréquence. L'estimateur des fréquences d'intérêt peut en outre être déterminé en fonction de la loi de probabilité a posteriori sur la fréquence.

L'algorithme EM comprend deux étapes alternativement itérées : une E-étape ou étape d'espérance, et une M-étape ou étape de maximisation. Préférentiellement, la troisième étape 130 de séparation de sources comprend donc deux sous-étapes 131 et 132, correspondant aux étapes E-étape et M-étape de l'algorithme EM, qui sont alternativement répétées jusqu'à satisfaction d'un critère de convergence prédéfini. L'étape 130 est donc une itération alternative des sous-étapes 131 et 132.

La première sous-étape 131, ou E-étape, est une étape d'estimation des fréquences d'intérêt $f_n$ à partir des amplitudes $\mathbf{A}_n$ du contenu harmonique d'intérêt. La deuxième sous-étape 132, ou M-étape, est une étape d'estimation des amplitudes $\mathbf{A}_n$ en fonction des valeurs des fréquences $f_n$, déterminées à la sous-étape 131 précédemment effectuée.

Le critère de convergence prédéfini est de préférence un critère défini de sorte que l'erreur finale sur l'estimation des fréquences d'intérêt $f_n$ et des amplitudes $\mathbf{A}_n$ des fréquences d'intérêt est suffisamment petite, par exemple inférieur à un seuil d'erreur prédéfini. Le critère de convergence peut, par exemple, être le seuil d'erreur prédéfini à atteindre ou un nombre maximum d'itérations de l'étape 130 à réaliser.

On rappelle que le contenu spectral $\mathbf{V}_n$ du bruit est modélisé par une distribution à queue lourde pour tenir compte du caractère multi-harmonique du contenu harmonique de non-intérêt. Préférentiellement, le contenu spectral $V(n, f)$, $n \in \{1,...,N\}$ et $k \in \{0, ..., F - 1\}$ est considéré comment étant indépendant et identiquement distribué selon une distribution Gaussienne généralisée lissée (GGL). Cette distribution GGL peut être telle que :

$$g(z;\ \beta, \delta, \sigma) = \ C(\sigma, \delta, \beta) e^{-\left(\frac{|z|^2}{\sigma^2}+\delta\right)^{\frac{\beta}{2}}}, (\text{eq. } 15)$$

où $\beta > 0$ est un paramètre de forme, $\sigma > 0$ est un facteur de forme (également appelé variance de la distribution GGL), $\delta > 0$ est une constante et $C(\sigma, \delta, \beta)$ est une constante de normalisation.

L'intérêt d'utiliser une GGL, par rapport une loi Gaussienne généralisée (GG), est que la constante $\delta$, non présente dans la GG, prend généralement de petites valeurs, par exemple $\delta = 10^{-4}$), ce qui permet à la GGL d'avoir un comportement similaire à celui d'une Gaussienne autour du 0 et permet de conserver une statistique robuste. De plus, le paramètre $\delta$ permet à la densité de probabilité d'être différentiable à l'origine, ce qui permet d'utiliser des méthodes basées sur un calcul de gradient plus efficacement.

Le paramètre de forme $\beta$ est représentatif du caractère impulsif du bruit spectral. Le paramètre de forme $\beta$ est préférentiellement choisi pour avoir une valeur entre comprise entre 0 et 2, pour conserver les propriétés mathématiques d'une distribution Gaussienne. Pour éviter toute divergence liée à de la convexité, le paramètre de forme $\beta$ est choisi de façon à ne pas être trop petit. Préférentiellement, ce paramètre est supérieur à 0,1.

On rappelle également que les fréquences d'intérêt $f_n$ sont des variables discrètes. Elles peuvent prendre des valeurs parmi un ensemble possible de fréquences $\mathcal{F}$ de cardinal $B$. Par exemple, $\mathcal{F}$ peut être tout l'axe de fréquence de la TFCT, dans ce cas $B = F$, ou uniquement un sous-ensemble de l'axe de fréquence, dans ce cas $B < F$, si les bornes minimales et maximales des fréquences d'intérêt $f_n$ sont connues. Il est ainsi possible d'écrire une log-vraisemblance $I(.)$ où les fréquences d'intérêt $f_n$ sont marginalisées d'une distribution jointe :

$$l(\mathbf{A}_n; \mathbf{Y}_n) = -\log p(\mathbf{Y}_n|\mathbf{A}_n)$$
$$l(\mathbf{A}_n; \mathbf{Y}_n) = -\log \sum_{v_k \in \mathcal{F}} p(\mathbf{Y}_n, f_n = v_k|\mathbf{A}_n) \quad , (\text{eq.}16)$$
$$l(\mathbf{A}_n; \mathbf{Y}_n) = -\sum_{v_k \in \mathcal{F}} \partial(f_n - v_k) \sum_{f=1}^{F} \log g\left([\mathbf{Y}_n - \mathbf{H}(v_k)\mathbf{A}_n]_f; \beta, \delta, \sigma\right)$$

où $v_k$ représente les valeurs que peut prendre la fréquence $f_n$ dans l'ensemble de fréquences $\mathcal{F}$ et $\partial(.)$ est le delta de Kronecker.

Dans l'équation (eq.16), le logarithme est appliqué à une somme de densités. La somme à l'intérieur du logarithme empêche donc l'application du logarithme directement à la probabilité jointe $p(\mathbf{Y}_n, f_n = v_k|\mathbf{A}_n)$. Ceci résulte en une expression compliquée de la solution du maximum a posteriori. Cependant, pour une fréquence d'intérêt $f_n$ donnée, sachant la fonction de log-vraisemblance négative de $\{\mathbf{Y}_n, f_n\}$ donnée par $-\log p(\mathbf{Y}_n, f_n|\mathbf{A}_n)$, un estimateur de l'amplitude $\mathbf{A}_n$ de la fréquence d'intérêt $f_n$ peut-être estimé à partir d'une distribution $\hat{\mathbf{A}}_n$ a posteriori de l'amplitude après l'obtention des observations $\mathbf{Y}_n$. Ceci est équivalent à minimiser le logarithme négatif de la probabilité a posteriori donné par :

$$G(\mathbf{A}_n|\mathbf{Y}_n, f_n) = -\log p(\mathbf{A}_n|\mathbf{Y}_n, f_n)$$
$$G(\mathbf{A}_n|\mathbf{Y}_n, f_n) = l(\mathbf{A}_n; \mathbf{Y}_n) - \log p(\mathbf{A}_n) \quad , (\text{eq.}17)$$

où $G(\mathbf{A}_n|\mathbf{Y}_n, f_n)$ est la probabilité a posteriori considérée après l'obtention des observations $\mathbf{Y}_n$. $p(\mathbf{A}_n)$. La probabilité a posteriori représente les hypothèses faites sur les amplitudes $\mathbf{A}_n$. La fonction de log-vraisemblance $l(\mathbf{A}_n; \mathbf{Y}_n)$ exprime à quel point il est probable que les observations $\mathbf{Y}_n$ puissent être liées au paramètre $\mathbf{A}_n$.

Quand les fréquences $f_n$ sont observées, la minimisation de (16) est directe. Cependant, seules les observations $\mathbf{Y}_n$ sont connues car $f_n$ n'est pas observable dans un cas d'application avec un signal vibratoire d'un moteur d'aéronef. Au contraire, une loi a priori $p_k(n)$ sur la répartition des fréquences $f_n$ est observable à chaque pas de temps $n : p_1(n),...,p_B(n)$.

Elle donne la probabilité a priori que les fréquences $f_n$ prennent les valeurs $v_1,...,v_B$ dans $\mathcal{F}$, respectivement.

Ce type de résolution de problème à paramètre non observable est rendu possible grâce à l'utilisation d'un algorithme tel que l'algorithme EM. L'algorithme vise ainsi à obtenir des estimateurs du maximum de la probabilité a posteriori (MPA) à partir des observations. Dans l'algorithme EM, les fréquences d'intérêt $f_n$ sont une variable cachée, c'est-à-dire une variable permettant d'estimer les amplitudes $\mathbf{A}_n$. Ce choix est motivé par la facilité de calculer l'espérance de la log-vraisemblance quand il s'agit de variables discrètes. En effet, les fréquences d'intérêt $f_n$ sont à valeurs discrètes alors que les amplitudes $\mathbf{A}_n$ sont à valeurs continues.

Mathématiquement, l'algorithme EM se traduit de la façon suivante.

L'étape d'espérance ou E-étape, également la sous-étape 131 de la méthode 100 selon l'invention, peut comporter une première sous-sous-étape 131a de détermination d'une probabilité a posteriori $z_k(n)^{(i+1)}$ sur les fréquences d'intérêt $f_n$. Cette première sous-sous-étape 131a permet ensuite, dans une deuxième sous-sous-étape 131b, de déterminer une espérance $Q^{(i+1)}\left(\mathbf{A}_n, \mathbf{A}_n^{(i)}\right)$ de la log-vraisemblance $l(\mathbf{A}_n; \mathbf{Y}_n)$ de l'équation (eq.16). L'espérance

$Q^{(i+1)}\left(\mathbf{A}_n, \mathbf{A}_n^{(i)}\right)$ de la log-vraisemblance peut, en outre, être déterminée à partir d'une distribution conditionnelle $p\left(f_n|\mathbf{Y}_n, \mathbf{A}_n^{(i)}\right)$ des fréquences d'intérêt $f_n$, sachant des données observées $\mathbf{Y}_n$, et sachant une estimation actuelle des

amplitudes $\mathbf{A}_n^{(i)}$. L'indice $i$ indique le numéro de l'itération en cours de l'algorithme EM.

Dans la première sous-sous-étape 131a, la probabilité a posteriori $z_k(n)^{(i+1)}$ peut être définie par :

$$z_k(n)^{(i+1)} = \mathbb{E}\left[f_n|\mathbf{Y}_n, \mathbf{A}_n^{(i)}\right]$$
$$z_k(n)^{(i+1)} = p^{(i+1)}\left(f_n = v_k\Big|\mathbf{Y}_n, \mathbf{A}_n^{(i)}\right) \quad . (\text{eq.}18)$$

En utilisant la formule de Bayes, la probabilité a posteriori $z_k(n)^{(i+1)}$ de l'équation (eq.18) peut s'écrire :

$$z_k(n)^{(i+1)} = \frac{p^{(i+1)}\left(\mathbf{Y}_n \big| f_n = v_k, \mathbf{A}_n^{(i)}\right) p^{(i+1)}\left(f_n = v_k \big| \mathbf{A}_n^{(i)}, \mathbf{Y}_n\right)}{p^{(i+1)}\left(\mathbf{Y}_n, \mathbf{A}_n^{(i)}\right)}$$

$$z_k(n)^{(i+1)} = \frac{p_k(n) \prod_{f=1}^F g\left(\left[\mathbf{Y}_n - \mathbf{H}(v_k)\mathbf{A}_n^{(i)}\right]_f; \beta, \delta, \sigma\right)}{\sum_k p_k(n) \prod_{f=1}^F g\left(\left[\mathbf{Y}_n - \mathbf{H}(v_k)\mathbf{A}_n^{(i)}\right]_f; \beta, \delta, \sigma\right)} \quad .\,(\text{eq. } 19)$$

La loi a priori $p_k(n)$ sur la répartition des fréquences peut être initialisée en fonction de valeurs connues des fréquences d'intérêt dans le spectrogramme. Ces valeurs peuvent être par exemple connues grâce à une analyse dimensionnelle de la ligne d'arbre du moteur de l'aéronef. L'intérêt est d'apporter de l'information a priori sur les fréquences d'intérêt sur $f_n$. Ces valeurs peuvent, par exemple, être des valeurs minimales $f_{min}$ et maximales $f_{max}$, ou être des valeurs autour d'une harmonique ($[k\,f_{min},\,k\,f_{max}]$).

$p_k(n)$ peut ensuite être actualisé depuis l'instant $n$ à l'instant $n + 1$ en prenant en compte les estimations précédentes des fréquences d'intérêt $f_n$ et en utilisant une distribution marginale. La distribution marginale peut, entre autres, être obtenue par une intégration sur les estimations précédentes des fréquences d'intérêt $f_n$ dans une distribution jointe $p(f_n, ..., f_{n-M})$, dans une fenêtre donnée de taille $M$.

La distribution jointe $p(f_n)$ peut être obtenue en utilisant une connaissance a priori sur la continuité de la courbe des fréquences. En considérant que $M = 1$, la distribution jointe devient $p(f_n) = \sum_{v_k \in \mathcal{F}} q(f_n | f_{n-1} = v_k; \varepsilon^2)\, z_k(n-1)$, où $q(. \,| f_{n-1} = v_k; \varepsilon^2)$ est une densité Gaussienne de moyenne $v_k$ et de variance $\varepsilon^2$. Ceci est équivalent à convoluer les densités conditionnelles précédentes $p(f_{n-1} | \mathbf{A}_{n-1}, \mathbf{Y}_{n-1})$ avec un noyau Gaussien. Il est rappelé que $v_k$ représente les valeurs que peut prendre la fréquence $f_n$ dans l'ensemble de fréquences $\mathcal{F}$.

Deux exemples de lois de probabilité a posteriori $\mathbf{z}_k$ sur la fréquence sont présentés sur la figure 6. Ces lois de probabilité a posteriori $\mathbf{z}_k$ sont obtenues à partir des spectrogrammes 1200 égalisés de la figure 6. La loi de probabilité a posteriori 1310a est obtenue à partir du spectrogramme 1200a égalisé de l'application ave le moteur d'avion. La loi de probabilité a posteriori 1310b est obtenue à partir du spectrogramme 1200b égalisé de l'application avec le moteur d'hélicoptère. Cette figure met en évidence que, en fonction du choix du paramètre de forme $\beta$, la loi a priori $p_k(n)$ permet de garantir la continuité de la courbe des fréquences et des ordres des harmoniques entre les instants temporels, la trajectoire d'intérêt peut devenir la trajectoire la plus énergétique dans le spectrogramme.

A partir de cette loi de probabilité a posteriori $\mathbf{z}_k$, il est possible de déterminer un ou plusieurs estimateurs ponctuels pour estimer la fréquence instantanée $f$. Par exemple, un estimateur ponctuel de la fréquence instantanée $\hat{f}_n^{i+1}$ peut être la valeur qui maximise la probabilité a posteriori $z_k(n)^{(i+1)}$.

Durant la sous-étape 131, l'espérance $Q^{(i+1)}\left(\mathbf{A}_n, \mathbf{A}_n^{(i)}\right)$ de la log-vraisemblance négative $-\log(f_n | \mathbf{Y}_n, \mathbf{A}_n)$ peut, par exemple, être écrite par rapport à la probabilité a posteriori $p\left(f_n = v_k \big| \mathbf{Y}_n, \mathbf{A}_n^{(i)}\right)$. L'espérance de la log-vraisemblance négative $-\log(f_n | \mathbf{Y}_n, \mathbf{A}_n)$ peut être donnée par :

$$Q^{(i+1)}\left(\mathbf{A}_n, \mathbf{A}_n^{(i)}\right) = \mathbb{E}_{p\left(f_n = v_k \big| \mathbf{Y}_n, \mathbf{A}_n^{(i)}\right)}\left[\log p(\mathbf{Y}_n, f_n = v_k | \mathbf{A}_n]\right.$$

$$Q^{(i+1)}\left(\mathbf{A}_n, \mathbf{A}_n^{(i)}\right) = -\sum_{v_k \in \mathcal{F}} p(f_n = v_k | \mathbf{Y}_n, \mathbf{A}_n^{(i)}) \log p(\mathbf{Y}_n, f_n = v_k | \mathbf{A}_n) \quad .\,(\text{eq. } 20)$$

$$Q^{(i+1)}\left(\mathbf{A}_n, \mathbf{A}_n^{(i)}\right) = -\sum_{v_k \in \mathcal{F}} z_k(n)^{(i+1)} \sum_{f=1}^F \log g\left(\left[\mathbf{Y}_n - \mathbf{H}(v_k)\mathbf{A}_n^{(i)}\right]_f; \beta, \delta, \sigma\right)$$

La probabilité a posteriori $z_k(n)^{(i+1)}$ et l'espérance $Q^{(i+1)}\left(\mathbf{A}_n, \mathbf{A}_n^{(i)}\right)$ de la log-vraisemblance peuvent ensuite être utilisée dans la M-étape pour déterminer les amplitudes $\mathbf{A}_n$ des fréquences d'intérêt.

L'étape de maximisation ou M-étape, également la sous-étape 132 de la méthode 100 selon l'invention, permet de déterminer les valeurs des amplitudes $\mathbf{A}_n$.

Durant l'étape de maximisation, les amplitudes $\mathbf{A}_n$ peuvent être déterminées en trouvant l'argument qui maximise sa densité jointe ou, d'une manière équivalente, qui minimise son logarithme négatif :

$$\mathbf{A}_n^{(i+1)} = \arg \min_{\mathbf{A}_n \in \mathbb{C}^P} G^{(i+1)}\left(\mathbf{A}_n | \mathbf{Y}_n\right) . \, (\text{eq.} \, 21)$$

Durant une première sous-sous-étape 132a, une probabilité a posteriori $G^{(i+1)}(\mathbf{A}_n|\mathbf{Y}_n)$ sur l'amplitude est déterminé. Par exemple, la probabilité a posteriori $G^{(i+1)}(\mathbf{A}_n|\mathbf{Y}_n)$ est déterminée par :

$$G^{(i+1)}(\mathbf{A}_n|\mathbf{Y}_n) = Q^{(i+1)}\left(\mathbf{A}_n, \mathbf{A}_n^{(i)}\right) - \log p(\mathbf{A}_n) . \, (\text{eq.} \, 22)$$

La distribution a priori $p(\mathbf{A}_n)$ pour les amplitudes inconnues $\mathbf{A}_n$, peut suivre un modèle prédéfini. Préférentiellement, l'évolution des amplitudes $\mathbf{A}_n$ suit un modèle autorégressif tenant compte des anciennes mesures, ce qui permet de contraindre la régularité des amplitudes $\mathbf{A}_n$ des trajectoires. Par exemple, le modèle prédéfini peut être un modèle linéaire tel que $\mathbf{A}_n = \alpha \mathbf{A}_{n-1} + \varepsilon_n$, où $\varepsilon_n$ suit une distribution Gaussienne circulaire complexe, avec $\alpha$ est une constante connue telle que $1 \geq \alpha > 0$. Alternativement, le modèle prédéfini peut être un modèle non-linéaire.

La résolution de l'équation (eq.21) à l'étape 132, pour déterminer les amplitudes $\mathbf{A}_n$, peut, en outre, être comprendre durant une deuxième sous-sous-étape 132b. Cette deuxième sous-sous-étape 132b permet, par exemple au moyen d'un algorithme itératif, de déterminer la probabilité a posteriori $G^{(i+1)}(\mathbf{A}_n|\mathbf{Y}_n)$. Par ailleurs, la probabilité a posteriori $G^{(i+1)}(\mathbf{A}_n|\mathbf{Y}_n)$ étant différentiable et convexe pour $\beta \geq 1$, il est possible d'utiliser un algorithme itératif basé sur une estimation de gradient. Il est par exemple possible d'utiliser un algorithme majoration-minimisation (MM).

La sous-étape 132 peut, ensuite, comprendre une sous-sous-étape 132c d'actualisation du facteur de forme $\sigma$, ou variance, de la distribution GGL du bruit. L'actualisation peut être effectuée par une estimation d'un maximum de vraisemblance du facteur de forme de la distribution du bruit $\sigma$, à partir de l'équation (eq.17). L'estimation du maximum de vraisemblance peut, par exemple, être formulée comme

$$\sigma_{(q+1)}^{(i+1)} = \operatorname*{argmin}_{\sigma \in \mathbb{R}} G^{(i+1)}\left(\mathbf{A}_n = \mathbf{A}_{n\,(q)}^{(i+1)} | \mathbf{Y}_n\right) . \, (\text{eq.} \, 23)$$

A l'itération $q + 1$ de l'algorithme MM et $i + 1$ de l'algorithme EM, une fois que le gradient de probabilité a posteriori $G\left(\mathbf{A}_{n\,(q)}^{(i)}\right)$ est estimé, une estimation de $\sigma_{(q+1)}^{(i+1)}$ peut être donnée par :

$$\sigma_{(q+1)}^{(i+1)} = \left( \frac{\beta \sum_{\nu_k \in \mathcal{F}} \sum_{f=1}^{F} \left[\mathbf{Y}_n - \mathbf{H}(\nu_k)_{(q)}\, \mathbf{A}_{n\,(q)}^{(i+1)}\right]_f^{\beta}}{2F \sum_{\nu_k \in \mathcal{F}} z_k(n)^{(i+1)}} \right)^{\frac{1}{\beta}} . \, (\text{eq.} \, 24)$$

Les amplitudes $\mathbf{A}_n$ et la variance $\sigma_{(q+1)}^{(i+1)}$ de la distribution GGL peuvent ensuite être utilisées dans une nouvelle itération de l'algorithme EM pour déterminer la probabilité a posteriori $z_k(n)$ sur les fréquences d'intérêt.

A l'issu de l'étape 130, après satisfaction du critère de convergence de l'algorithme EM, l'estimateur des fréquences d'intérêt déterminé est, par exemple, la probabilité a posteriori $z_k(n)$, pour tous les instants n, déterminé à la dernière itération de la sous-étape 131.

Enfin, la méthode 100 selon l'invention comprend une quatrième étape 140 pour déterminer la vitesse de rotation instantanée du moteur de l'aéronef. La vitesse de rotation instantanée est préférentiellement estimée en fonction de l'estimateur des fréquences d'intérêt. Avantageusement, la vitesse de rotation instantanée est estimée à l'aide de la fonction de régression dont l'erreur suit la distribution à queue lourde, ce qui permet de démoduler ladite vitesse de rotation instantanée simultanément à partir de plusieurs harmoniques. La robustesse de l'estimation est donc grandement améliorée vis-à-vis des déviations causées par d'autres harmoniques de non-intérêt.

La vitesse de rotation instantanée peut être déterminée en fonction d'une partie de l'estimateur des fréquences d'intérêt. Par exemple, dans le cas où l'estimateur des fréquences d'intérêt est la probabilité a posteriori $z_k(n)$, pour tous les instants $n$, la fréquence instantanée peut être déterminée en fonction du maximum de l'estimateur des fréquences d'intérêt. Le maximum de l'estimateur des fréquences d'intérêt est particulièrement adapté au cas où il y a plusieurs maximaux locaux à discriminer parmi les fréquences d'intérêt.

Alternativement, plutôt que le maximum de l'estimateur, il est possible d'utiliser sa moyenne, permettant d'avoir une estimation plus lissée de la fréquence d'intérêt.

La fréquence instantanée $\hat{f}_n$ peut, à chaque instant n, être déterminée par :

$$\hat{f}_n = \underset{\nu_k \in \mathcal{F}}{\operatorname{argmax}} \ \mathbf{z}(n)^{(I)} \ . \ (\mathrm{eq.}\,25)$$

La fréquence instantanée $\hat{f}_n$ étant déterminée pour les instants $n$, la méthode 100 selon l'invention peut comporter une cinquième étape 150 d'interpolation des valeurs de la fréquence instantanée $\hat{f}_n$. Cette interpolation permet d'obtenir un signal de la même longueur que le signal vibratoire *x(n)* discret. L'interpolation peut, par exemple, être effectuée par une interpolation de type spline.

La méthode 100 selon l'invention peut, en outre, comporter une sixième étape 160 de lissage de l'interpolation des valeurs de la fréquence instantanée $\hat{f}_n$. Ce lissage permet d'atténuer l'effet palier induit par la résolution fréquentielle.

Il est alors possible de tracer un spectrogramme 1300 corrigé, comme les spectrogrammes 1300a et 1300b de la figure 2, dans lequel les trajectoires 1310 sont clairement visibles. La trajectoire 1310 de plus forte amplitude est ainsi la trajectoire de la vitesse de rotation instantané du moteur de l'aéronef.

La méthode 100 selon l'invention peut, par ailleurs, comporter une septième étape 170 de détection d'une anomalie de fonctionnement du moteur de l'aéronef. Préférentiellement, cette détection est effectuée en fonction de la vitesse de rotation instantanée, ou de la trajectoire 1310 associée, déterminées à l'une des étapes 140 à 160.

L'anomalie de fonctionnement est, par exemple, détectée en comparant la vitesse de rotation instantanée, ou la trajectoire 1310 associée, à une vitesse de rotation de référence, ou des données sur une trajectoire 1310 de référence. La détection peut, en outre, informer de la présence d'une anomalie au moyen d'une alerte émise. La détection peut, par exemple, être émise lorsqu'un écart significatif est déterminé entre la vitesse de rotation instantanée déterminée et la vitesse de rotation instantanée de référence. Cet écart est, par exemple, significatif lorsqu'il est supérieur à un certain seuil de fonctionnement normal prédéfini, lequel peut être connu au moyen d'une analyse dimensionnelle de la ligne d'arbre du moteur de l'aéronef.

## Revendications

**1.** Méthode (100) de surveillance du régime moteur d'une machine tournante réalisée par ordinateur, la méthode (100) comprenant les étapes suivantes :

- Construction (110) d'un spectrogramme (1100) brut à partir d'un signal vibratoire mesuré par un capteur de vibrations ;
- Débruitage (120) du spectrogramme (1100) brut pour obtenir un spectrogramme (1200) égalisé, l'étape de débruitage (120) comprenant :

  ○ Une première sous-étape (121) de détermination d'un pied du spectrogramme (1100) brut, le pied du spectre étant un ensemble de composantes harmoniques aléatoires contenues dans le spectrogramme (1100) brut, la première sous-étape (121) comprenant :

    • Une première sous-sous-étape (121a) de construction d'une fonction de régression robuste aux pics du spectrogramme (1100) brut, la fonction de régression étant appliquée à un logarithme du spectrogramme (1100) brut ou au spectrogramme (1100) brut ;
    • Une deuxième sous-sous-étape (121b) de détermination du pied du spectre à partir de la fonction de régression ;

  ○ Une deuxième sous-étape (122) de détermination du spectrogramme (1200) égalisé à partir du pied du spectrogramme ;

- Séparation de sources (130) dans le spectrogramme (1200) égalisé par détermination d'un estimateur des fréquences d'intérêt ;
- Détermination (140) d'une vitesse de rotation instantanée du régime moteur à partir de l'estimateur des fréquences d'intérêt.

2. Méthode (100) de surveillance du régime moteur d'une machine tournante selon la revendication précédente, la méthode (100) comprenant en outre une étape (170) de détection d'une anomalie de fonctionnement du moteur de la machine tournante en fonction de la vitesse de rotation instantanée.

3. Méthode (100) de surveillance du régime moteur d'une machine tournante selon l'une des revendications précédentes dans laquelle le spectrogramme (1100) brut est construit par une Transformée de Fourier appliquée au signal vibratoire sur une pluralité de fenêtres temporelles successives et de courte durée.

4. Méthode (100) selon l'une des revendications précédentes, dans laquelle l'étape de séparation de sources (130) est répétée jusqu'à satisfaction d'un critère de convergence, ladite étape de séparation de sources (130) comprenant une première sous-étape (131) de détermination de fréquences d'intérêt en fonction d'amplitudes des fréquences d'intérêt, et une deuxième sous-étape (132) d'estimation des amplitudes des fréquences d'intérêt en fonction des fréquences d'intérêt, lesdites première et deuxième sous-étapes (131,132) étant alternativement exécutées à chaque itération de ladite étape de séparation de sources (130), et l'estimateur des fréquences d'intérêt étant en outre déterminé en fonction des fréquences d'intérêt et des amplitudes des fréquences d'intérêt.

5. Méthode (100) selon la revendication précédente, dans laquelle l'étape de séparation de sources (130) est mise en œuvre par un algorithme Espérance-Maximisation, où la première sous-étape (131) de détermination de fréquences d'intérêt est la E-étape de l'algorithme Espérance-Maximisation, et où la deuxième sous-étape (132) d'estimation des amplitudes des fréquences d'intérêt est la M-étape de l'algorithme Espérance-Maximisation.

6. Méthode (100) selon l'une des revendications 4 et 5, dans laquelle la sous-étape (131) de détermination de fréquences d'intérêt en fonction d'amplitudes des fréquences d'intérêt comprend une première sous-sous-étape (131a) de détermination d'une probabilité a posteriori sur les fréquences d'intérêt, et une deuxième sous-étape (131b) de détermination d'une espérance d'une log-vraisemblance des amplitudes des fréquences d'intérêt.

7. Méthode (100) selon l'une des revendications 4 à 6, dans laquelle la sous-étape (132) d'estimation des amplitudes des fréquences d'intérêt en fonction des fréquences d'intérêt comprend une première sous-sous-étape (132a) de détermination d'une probabilité a posteriori sur les amplitudes des fréquences d'intérêt, une deuxième sous-sous-étape (132b) de détermination d'une probabilité a posteriori sur les amplitudes des fréquences d'intérêt, et une troisième sous-sous-étape (132c) de détermination d'une variance d'une distribution Gaussienne généralisée lissée du spectrogramme (1200) égalisé.

8. Méthode (100) selon l'une des revendications précédentes, dans laquelle l'estimateur des fréquences d'intérêt est déterminé, à la satisfaction d'un critère d'arrêt, en fonction de la probabilité a posteriori sur les fréquences d'intérêt.

9. Méthode (100) selon l'une des revendications précédentes, la méthode (100) comprenant en outre une étape (150) d'interpolation de l'estimateur des fréquences d'intérêt.

10. Méthode (100) selon la revendication précédente, la méthode (100) comprenant en outre une étape (160) de lissage de l'interpolation de l'estimateur des fréquences d'intérêt.

**Patentansprüche**

1. Verfahren (100) zur computergestützten Überwachung der Motordrehzahl einer rotierenden Maschine, wobei das Verfahren (100) die folgenden Schritte umfasst:

- Erstellen (110) eines Rohspektrogramms (1100) anhand eines von einem Schwingungssensor gemessenen Schwingungssignals;
- Rauschunterdrückung (120) des Rohspektrogramms (1100), um ein entzerrtes Spektrogramm (1200) zu erhalten, wobei der Schritt der Rauschunterdrückung (120) umfasst:

◦ einen ersten Teilschritt (121) zur Bestimmung einer Basis des Rohspektrogramms (1100), wobei die Basis des Spektrums eine Menge zufälliger harmonischer Komponenten ist, die im Rohspektrogramm (1100) enthalten sind und der erste Teilschritt (121) umfasst:

- einen ersten Unterteilschritt (121a) zum Erstellen einer robusten Regressionsfunktion für die Spitzen des Rohspektrogramms (1100), wobei die Regressionsfunktion auf einen Logarithmus des Rohspektrogramms (1100) oder auf das Rohspektrogramm (1100) angewendet wird;
- einen zweiten Unterteilschritt (121b) zur Bestimmung der Basis des Spektrums anhand der Regressionsfunktion;

∘ einen zweiten Teilschritt (122) zur Bestimmung des entzerrten Spektrogramms (1200) anhand der Basis des Spektrogramms;

- Quellentrennung (130) im entzerrten Spektrogramm (1200) durch Bestimmung eines Schätzers der relevanten Frequenzen;
- Bestimmung (140) einer momentanen Drehzahl des Motors anhand des Schätzers der relevanten Frequenzen.

2. Verfahren (100) zur Überwachung der Motordrehzahl einer rotierenden Maschine gemäß dem vorstehenden Anspruch, wobei das Verfahren (100) ferner einen Schritt (170) zur Erkennung einer Betriebsstörung des Motors der rotierenden Maschine in Abhängigkeit von der momentanen Drehzahl umfasst.

3. Verfahren (100) zur Überwachung der Motordrehzahl einer rotierenden Maschine gemäß einem der vorstehenden Ansprüche, bei dem das Rohspektrogramm (1100) durch eine Fourier-Transformation erstellt wird, die auf das Schwingungssignal über eine Vielzahl aufeinanderfolgender, kurzer Zeitfenster angewendet wird.

4. Verfahren (100) gemäß einem der vorstehenden Ansprüche, bei dem der Schritt der Quellentrennung (130) wiederholt wird, bis ein Konvergenzkriterium erfüllt ist, wobei der Schritt der Quellentrennung (130) einen ersten Teilschritt (131) zur Bestimmung von relevanten Frequenzen in Abhängigkeit von den Amplituden der relevanten Frequenzen und einen zweiten Teilschritt (132) zur Schätzung der Amplituden der relevanten Frequenzen in Abhängigkeit der relevanten Frequenzen umfasst, wobei der erste und der zweite Teilschritt (131,132) bei jeder Iteration des Quellentrennungsschritts (130) abwechselnd ausgeführt werden, und wobei der Schätzer der relevanten Frequenzen ferner in Abhängigkeit von den relevanten Frequenzen und den Amplituden der relevanten Frequenzen bestimmt wird.

5. Verfahren (100) nach dem vorstehenden Anspruch, bei dem der Quellentrennungsschritt (130) durch einen Erwartungs-Maximierungs-Algorithmus durchgeführt wird, bei dem der erste Teilschritt (131) zur Bestimmung der relevanten Frequenzen der E-Schritt des Erwartungs-Maximierungs-Algorithmus ist und bei dem der zweite Teilschritt (132) zur Schätzung der Amplituden der relevanten Frequenzen der M-Schritt des Erwartungs-Maximierungs-Algorithmus ist.

6. Verfahren (100) nach einem der Ansprüche 4 und 5, bei dem der Teilschritt (131) zur Bestimmung von relevanten Frequenzen in Abhängigkeit von Amplituden der relevanten Frequenzen einen ersten Unterteilschritt (131a) zur Bestimmung einer A-posteriori-Wahrscheinlichkeit für die relevanten Frequenzen und einen zweiten Teilschritt (131b) zur Bestimmung eines Erwartungswerts einer Log-Wahrscheinlichkeit der Amplituden der relevanten Frequenzen umfasst.

7. Verfahren (100) gemäß einem der Ansprüche 4 bis 6, bei dem der Teilschritt (132) zum Schätzen der Amplituden der relevanten Frequenzen in Abhängigkeit von den relevanten Frequenzen einen ersten Unterteilschritt (132a) zum Bestimmen einer A-posteriori-Wahrscheinlichkeit für die Amplituden der relevanten Frequenzen, einen zweiten Unterteilschritt (132b) zur Bestimmung einer A-posteriori-Wahrscheinlichkeit für die Amplituden der relevanten Frequenzen und einen dritten Unterteilschritt (132c) zur Bestimmung einer Varianz einer geglätteten verallgemeinerten Gauß-Verteilung des entzerrten Spektrogramms (1200) umfasst.

8. Verfahren (100) gemäß einem der vorstehenden Ansprüche, bei dem der Schätzer der relevanten Frequenzen unter Erfüllung eines Abbruchkriteriums in Abhängigkeit von der A-posteriori-Wahrscheinlichkeit für die relevanten Frequenzen bestimmt wird.

9. Verfahren (100) nach einem der vorstehenden Ansprüche, bei dem das Verfahren (100) ferner einen Schritt (150) zum Interpolieren des Schätzers der relevanten Frequenzen umfasst.

10. Verfahren (100) nach dem vorstehenden Anspruch, bei dem das Verfahren (100) ferner einen Schritt (160) zum Glätten der Interpolation des Schätzers der relevanten Frequenzen umfasst.

**Claims**

1. A computer implemented method (100) for monitoring the engine speed of a rotating machine, the method (100) comprising the steps of:

   - Constructing (110) a raw spectrogram (1100) from a vibratory signal measured by a vibration sensor;
   - Denoising (120) the raw spectrogram (1100) to obtain an equalised spectrogram (1200), the denoising step (120) comprising:

     ◦ A first sub-step (121) of determining a foot of the raw spectrogram (1100), the foot of the spectrum being a set of random harmonic components contained in the raw spectrogram (1100), the first sub-step (121) comprising:

       • A first sub-sub-step (121a) of constructing a regression function robust to the peaks of the raw spectrogram (1100), the regression function being applied to a logarithm of the raw spectrogram (1100) or to the raw spectrogram (1100);
       • A second sub-sub-step (121b) of determining the foot of the spectrum from the regression function;

     ◦ A second sub-step (122) of determining the equalised spectrogram (1200) from the foot of the spectrogram;

   - Separating sources (130) in the equalised spectrogram (1200) by determining an estimator of the frequencies of interest;
   - Determining (140) an instantaneous speed of rotation of the engine speed from the estimator of the frequencies of interest.

2. The method (100) for monitoring the engine speed of a rotating machine according to the preceding claim, the method (100) further comprising a step (170) of detecting an operating anomaly of the engine of the rotating machine as a function of the instantaneous speed of rotation.

3. The method (100) for monitoring the engine speed of a rotating machine according to the preceding claim, wherein the raw spectrogram (1100) is constructed by a Fourier Transform applied to the vibratory signal over a plurality of successive time windows of short duration.

4. The method (100) according to one of the preceding claims, wherein the source separation step (130) is repeated until a convergence criterion is satisfied, said source separation step (130) comprising a first sub-step (131) of determining frequencies of interest as a function of amplitudes of the frequencies of interest, and a second sub-step (132) of estimating the amplitudes of the frequencies of interest as a function of the frequencies of interest, said first and second sub-steps (131,132) being alternately performed at each iteration of said source separation step (130), and the estimator of the frequencies of interest being further determined as a function of the frequencies of interest and the amplitudes of the frequencies of interest.

5. The method (100) according to the preceding claim, wherein the source separation step (130) is implemented by an Expectation-Maximization algorithm, wherein the first sub-step (131) of determining frequencies of interest is the E-step of the Expectation-Maximization algorithm, and wherein the second sub-step (132) of estimating amplitudes of the frequencies of interest is the M-step of the Expectation-Maximization algorithm.

6. The method (100) according to one of claims 4 and 5, wherein the sub-step (131) of determining frequencies of interest as a function of amplitudes of the frequencies of interest comprises a first sub-sub-step (131a) of determining an a posteriori probability on the frequencies of interest, and a second sub-sub-step (131b) of determining an expectation of a log-likelihood of the amplitudes of the frequencies of interest.

7. The method (100) according to one of claims 4 to 6, wherein the sub-step (132) of estimating the amplitudes of the frequencies of interest as a function of the frequencies of interest comprises a first sub-sub-step (132a) of determining an a posteriori probability on amplitudes of the frequencies of interest, a second sub-sub-step (132b) of determining an a posteriori probability on amplitudes of the frequencies of interest, and a third sub-sub-step (132c) of determining a variance of a smoothed generalised Gaussian distribution of the equalised spectrogram (1200).

8. The method (100) according to one of the preceding claims, wherein the estimator of the frequencies of interest is determined, as a stopping criterion is satisfied, as a function of the a posteriori probability on the frequencies of interest.

9. The method (100) according to one of the preceding claims, the method (100) further comprising a step (150) of interpolating the estimator of the frequencies of interest.

10. The method (100) according to the preceding claim, the method (100) further comprising a step (160) of smoothing the interpolation of the estimator of the frequencies of interest.

[Fig. 1]

[Fig. 2]

[Fig. 3]

[Fig. 4]

[Fig. 5]

[Fig. 6]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3087265 A1
- WO 2019207242 A1
- FR 3102858 A1
- FR 3096133 B1
- FR 3079977 B1
- EP 0724159 A
- US 20050209814 A